# EUROPEAN PATENT SPECIFICATION

(11) **EP 2 587 390 B1**
(45) Date of publication and mention of the grant of the patent: **12.06.2019**
(21) Application number: 10853032.0
(22) Date of filing: 16.12.2010
(51) Int. Cl.: H04L 12/58

(54) **INFORMATION-PROMPTING METHOD FOR ACCESSING MOBILE INTERNET SITES BY MOBILE TERMINAL AND MOBILE TERMINAL THEREOF**
INFORMATIONSEINGABEVERFAHREN ZUM ZUGRIFF AUF MOBILE INTERNETSEITEN ÜBER EIN MOBILES ENDGERÄT UND MOBILES ENDGERÄT DAFÜR
PROCÉDÉ D'INVITE D'INFORMATIONS POUR L'ACCÈS À DES SITES INTERNET MOBILES AU MOYEN D'UN TERMINAL MOBILE ET TERMINAL MOBILE ASSOCIÉ

(30) Priority: 22.06.2010 CN 201010210698
(43) Date of publication of application: 01.05.2013
(73) Proprietor: Huizhou TCL Mobile Communication Co., Ltd., Huizhou, Guangdong 516006 (CN)
(72) Inventor: ZHOU, Baozhong, Guangdong 516006 (CN)
(74) Representative: ZHAOffice SPRL
(86) International application number: PCT/CN2010/079904
(87) International publication number: WO 2011/160402

(56) References cited:
- CN-A- 101 227 502
- CN-A- 101 340 449
- CN-A- 101 894 141
- US-A1- 2004 237 109
- US-A1- 2008 288 866
- US-A1- 2009 138 439

## Description

### FIELD OF THE INVENTION

The present disclosure generally relates to the technical field of communication, and more particularly, to a method for giving a message prompt when a mobile terminal accesses a mobile Internet website and the mobile terminal.

### BACKGROUND OF THE INVENTION

WAP (Wireless Application Protocol) is a global unified open protocol standard for providing Internet content and advanced value-added services to mobile terminals (mobile phones). WAP defines a universal platform that can convert information in the HTML language in the Internet into information described in WML (Wireless Markup Language) for display on a mobile terminal's screen.

The most commonly used mobile phones adopting the WAP technology are WAP mobile phones. By integrating Internet technologies and mobile phone technologies together, the WAP mobile phones allow users to access the Internet through the mobile phones. Thus, a user owning a WAP-enabled mobile phone is able to access the Internet at any time and at any place, including sending or receiving e-mails, accessing webpages on WAP websites and so on.

However, mobile phones currently available lack the function of giving a message prompt when accessing a mobile Internet website. For example, a user may desire to get message prompts involving such as the data amount, fee charging information, advertisement information or the like when accessing a WAP website, but none of the conventional mobile phones can achieve this function.

US 2009/0138439 (D1) discloses a method of conducting a search on a mobile device. The search depends on the real-time location of the user, and the search may be for weather forecast, restaurants, movies listings, or the closet location of a particular retail store, etc. The method comprises: initiating a search query using a browser on the mobile device, the search query having a search string; automatically obtaining location information of the mobile device; simultaneously transmitting the location information and the search query to the content server; and receiving a search result from the content server in response to the search query. Specifically, before the step of automatically obtaining location information of the mobile device, the browser may request user authorization, that is, a popup in the browser may be used to display a warning message to the user and prompt the user for the confirmation on the disclosing of his location.

However, the browser search of D1 is based on the location of the user, and the prompt is only the user authorization for the confirmation on the disclosing of the location. That is, the prompt is justly an authorization information for the user, instead of the information of the WAP website which the user wants to access, thus the user still cannot watch the information related to the WAP website. Specifically, the user cannot know how much of data traffic for accessing the WAP website in advance.

US 2008/0288866 (D2) discloses a communication system. The communication system includes a mobile device and a portal. The mobile device is coupled to the portal via the communication network. The portal provides media carrousels to the mobile device via the communication network. The audio and/or video presentations are provided to the user of the mobile device via the carrousel application. The carrousel comprises a plurality of items such that the user may select one of the items to perform a corresponding function. Every item in the carrousel may have a set of parameters to define how the item is to be used. The parameters of the every item in the carrousel may comprises a Content_ID parameter, a Filename parameter, a Category parameter, a Type parameter, a Prompt parameter, a Disable_Skip parameter, .......Wherein, the Prompt parameter includes a filename of a prompt to be displayed during a purchase confirmation menu, and may have a predetermined maximum length.

D2 only shows the item in the carrousel may comprise the Prompt parameter, however, D2 does not show the prompt is the information for accessing the WAP website. Specifically, D2 does not show the prompt may be used to prompt the user to know how much of data traffic for accessing the WAP website in advance.

Accordingly, improvements and advancements still have to be made in the art.

### SUMMARY OF THE INVENTION

An objective of the present disclosure is to overcome the aforesaid shortcomings of the prior art by providing a method for giving a message prompt when a mobile terminal accesses a mobile Internet website and the mobile terminal. The method for giving a message prompt when a mobile terminal accesses a mobile Internet website and the mobile terminal of the present disclosure provide a new function of giving a message prompt when the mobile terminal accesses a mobile Internet website, and this makes the mobile phone very convenient to use.

The technical solutions of the present disclosure are as follows.

The present disclosure provides a method for giving a message prompt when a mobile terminal accesses a mobile Internet website, comprising the following steps of:
A. receiving a message of browsing a mobile Internet webpage from a user, and triggering a corresponding message prompt event as needed; and
B. parsing the message prompt event to obtain a corresponding prompt message, and displaying the prompt message;
   the method being characterized in that, further comprising the following steps prior to the step A:
   A1. defining a filename having a specific extension name for each mobile Internet webpage message prompt event, wherein the filename having the specific extension name comprises a label indicating whether to give a prompt, a prompt duration and a prompt content, and the prompt content is displayed for the prompt duration if the label indicating whether to give a prompt is yes; the message prompt event is a data traffic event, and the prompt content is a value of data traffic for browsing the mobile Internet webpage; and
   A2. encoding the filename having the specific extension name to obtain an encoded filename having the specific extension name.

Preferably in the method for giving a message prompt when a mobile terminal accesses a mobile Internet website, the step B further comprises:
B1. invoking a message prompt module to decode the encoded filename having the specific extension name corresponding to the message prompt event to obtain a decoded filename having the specific extension name;
B2. parsing the decoded filename having the specific extension name to obtain a corresponding prompt message; and
B3. invoking a message prompt box to display the prompt message.

Preferably in the method for giving a message prompt when a mobile terminal accesses a mobile Internet website, the step B3 further comprises: B31. displaying the prompt message continuously for a certain time.

Preferably, the method for giving a message prompt when a mobile terminal accesses a mobile Internet website further comprises the following step subsequent to the step B31:
C. closing the prompt message after the prompt message has been displayed for the certain time, and executing subsequent operations.

The present disclosure further provides a mobile terminal, comprising:
a message prompt event triggering module, being configured to receive a message of browsing a mobile Internet webpage from a user, and triggering a corresponding message prompt event as needed; and
a message prompt module, being configured to parse the message prompt event to obtain a corresponding prompt message and configured to display the prompt message;
the mobile terminal being characterized in that, further comprising:
   a message prompt event defining module, being configured to define a filename having a specific extension name for each mobile Internet webpage message prompt event, wherein the filename having the specific extension name comprises a label indicating whether to give a prompt, a prompt duration and a prompt content, and the prompt content is displayed for the prompt duration if the label indicating whether to give a prompt is yes; the message prompt event is a data traffic event, and the prompt content is a value of data traffic for browsing the mobile Internet webpage; and
   an encoding module, being configured to encode the filename having the specific extension name to obtain an encoded filename having the specific extension name.

Preferably in the mobile terminal, the message prompt module further comprises:
a decoding unit, being configured to decode the encoded filename having the specific extension name corresponding to the message prompt event to obtain a decoded filename having the specific extension name;
a parsing unit, being configured to parse the decoded filename having the specific extension name to obtain a corresponding prompt message; and
a displaying unit, being configured to invoke a message prompt box to display the prompt message continuously for a time duration.

Because the method for giving a message prompt when a mobile terminal accesses a mobile Internet website and the mobile terminal according to the present disclosure have a new function of giving a corresponding message prompt when the mobile terminal accesses a mobile Internet website (e.g., prompting the user of the website traffic, the fee charging information, advertisement information, and etc.), the user can timely know conditions of his or her mobile terminal accessing the Internet, which is very convenient for the user.

### BRIEF DESCRIPTION OF THE DRAWINGS

In order to more clearly describe the technical solutions of the embodiments of the present disclosure, attached drawings to be used in the detailed description of the disclosure will be briefly described hereinbelow. Obviously, the attached drawings described hereinbelow only illustrate some of the embodiments of the present disclosure, wherein:
FIG. 1 is a flowchart diagram of a method for giving a message prompt when a mobile terminal accesses a mobile Internet website according to an embodiment of the present disclosure;
FIG. 2 is a further flowchart diagram of the method for giving a message prompt when a mobile terminal accesses a mobile Internet website according to an embodiment of the present disclosure;
FIG. 3 is a block diagram of a mobile terminal according to an embodiment of the present disclosure; and
FIG. 4 is a block diagram of a message prompt module in the mobile terminal according to an embodiment of the present disclosure.

### DETAILED DESCRIPTION OF THE INVENTION

The present invention is further described in detail below with reference to the accompanying drawings and embodiments.

The present disclosure provides a method for giving a message prompt when a mobile terminal accesses a mobile Internet website and the mobile terminal. In order to make objectives, technical solutions and advantages of the present disclosure more apparent and obvious, embodiments of the present disclosure will be further detailed hereinbelow with reference to the attached drawings.

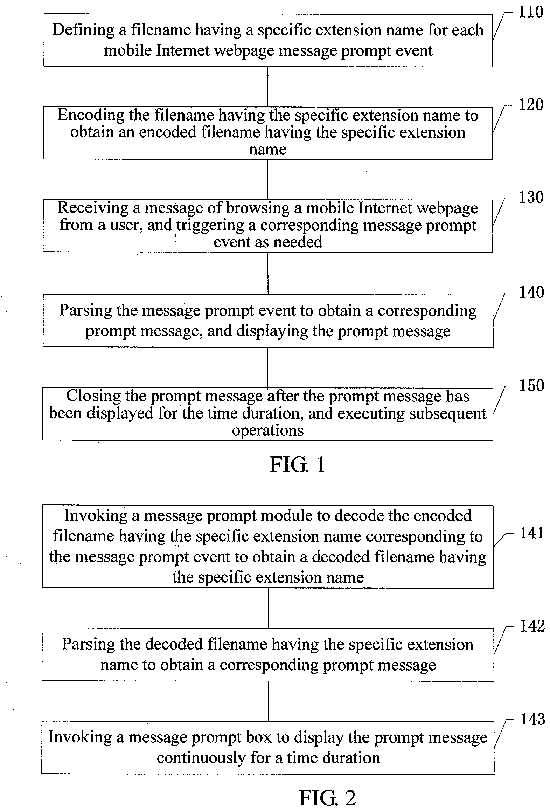

As shown in FIG. 1, the present disclosure provides a method for giving a message prompt when a mobile terminal accesses a mobile Internet website, which mainly comprises the following steps.

Step 110: defining a filename having a specific extension name for each mobile Internet webpage message prompt event.

Because the WML language is used for existing WAP websites, no message prompt label is available. In order to accomplish a specific service on a WAP webpage through use of a message prompt module of a mobile phone, a file type or a specific filename having a specific extension name is defined firstly in this embodiment of the present disclosure. An extension name ".pom" is defined for a file, a filename of the file having the specific extension name corresponds to a mobile Internet webpage, and a suffix ".pom" is appended to the WAP webpage filename.

The filename having the specific extension name includes three elements: a label indicating whether to give a prompt, a prompt duration, and a prompt content. A separator "|" may be used between any two of these elements, and the content of the prompt is followed by the suffix ".pom".

In the present disclosure, a prompt format of the three elements of the filename having a specific extension name, may be predetermined as, for example, "the label indicating whether to give a prompt|the prompt content|the prompt duration", "the prompt content|the label indicating whether to give a prompt| the prompt duration", "the prompt content|the prompt duration|the label indicating whether to give a prompt" or "the prompt duration| the prompt content|the label indicating whether to give a prompt" and so on.

For example, in a case where it is necessary to provide a prompt of data traffic to the user, a specific data traffic event indicates "3-seconds of prompting "data traffic of 200K"". Then, among the three elements of the specific data traffic event, the label indicating whether to give a prompt is Yes, the prompt duration is 3 seconds, and the prompt content is "data traffic of 200K". This specific data traffic event triggers a corresponding message prompt event for display, and a filename having a specific extension name corresponding to the data traffic message prompting event shall be "1|3| data traffic of 200K.pom".

Step 120: encoding the filename having the specific extension name to obtain an encoded filename having the specific extension name.

As described above, the filename having an extension name shall be "1|3|data traffic of 200K.pom". After being encoded, the filename is represented by hexadecimal UNICODE codes, so an encoded filename "????????????????.pom" having a specific extension name is obtained. Here, ".pom" is the specific extension name.

Step 130: receiving a message of browsing a mobile Internet webpage from a user, and triggering a corresponding message prompt event as needed.

When the user browses a webpage on the WAP website through his or her mobile phone, a message prompt event is triggered. For example, if it is necessary to prompt the user of the data traffic of a new webpage when the user logs on the webpage, then a traffic prompt event is triggered. The traffic prompt event corresponds to the encoded filename having the specific extension name, e.g., the UNICODE encoded filename "????????????????.pom" described above.

Step 140: parsing the message prompt event to obtain a corresponding prompt message, and displaying the prompt message.

As shown in FIG. 2, the step 140 further comprises the following steps.

Step 141: invoking a message prompt module to decode the encoded filename having the specific extension name corresponding to the message prompt event to obtain a decoded filename having the specific extension name.

If the system finds that the encoded filename having the specific extension name comprises the specific extension name (e.g., the suffix "p.com"), then the message prompt module is invoked to decode the filename to obtain a decoded filename having the specific extension name of "1|3|data traffic of 200K.pom".

Step 142: parsing the decoded filename having the specific extension name to obtain a corresponding prompt message.

That is, the filename having the specific extension name is parsed to obtain a corresponding prompt message: the label indicating whether to give a prompt: Yes; the prompt duration: 3 seconds; and the prompt content: "data traffic of 200K".

Step 143: invoking a message prompt box to display the prompt message continuously for a certain time.

As described in the above example, the prompt message is displayed to the user by the message prompt box to indicate a data traffic of 200K and a prompt duration of 3 seconds.

Step 150: closing the prompt message after the prompt message has been displayed for the certain time, and executing subsequent operations. That is, after the prompt message has been displayed for the prompt duration, the prompt is ended to execute subsequent procedures.

The above embodiment of the present disclosure is illustrated with a case of prompting the user of the data traffic as an example. However, in practical applications of the present disclosure, website accessing prompts related to other services may also be given, for example, to prompt the user of the fee charging information, to display advertisement information to the user and so on.

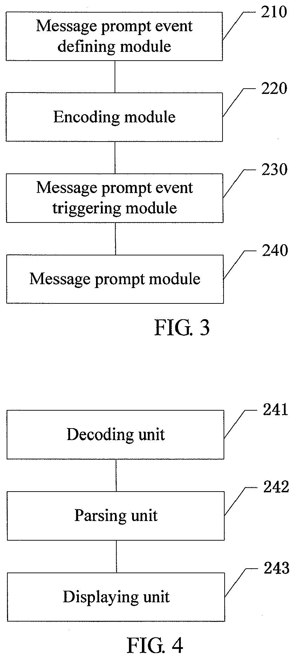

On the basis of the method for giving a message prompt when a mobile terminal accesses a mobile Internet website described above, an embodiment of the present disclosure further provides a mobile terminal. As shown in FIG. 3, the mobile terminal comprises:
a message prompt event defining module 210, being configured to define a filename having a specific extension name for each mobile Internet webpage message prompt event, wherein the filename having the specific extension name comprises: a label indicating whether to give a prompt, a prompt duration, and a prompt content;
an encoding module 220, being configured to encode the filename having the specific extension name to obtain an encoded filename having the specific extension name;
a message prompt event triggering module 230, being configured to receive a message of browsing a mobile Internet webpage from a user, and triggering a corresponding message prompt event as needed;
a message prompt module 240, being configured to parse the message prompt event to obtain a corresponding prompt message and configured to display the prompt message.

As shown in FIG. 4, the message prompt module 240 further comprises:
a decoding unit 241, being configured to decode the encoded filename having the specific extension name corresponding to the message prompt event to obtain a decoded filename having the specific extension name;
a parsing unit 242, being configured to parse the decoded filename having the specific extension name to obtain a corresponding prompt message; and
a displaying unit 243, being configured to invoke a message prompt box to display the prompt message continuously for a certain time.

According to the above descriptions, because the method for giving a message prompt when a mobile terminal accesses a mobile Internet website and the mobile terminal according to the present disclosure have a new function of giving a corresponding message prompt when the mobile terminal accesses a mobile Internet website (e.g., prompting the user of the website traffic, the fee charging information, advertisement information, and etc.), the user can timely know conditions of his or her mobile terminal accessing the Internet, which is very convenient for the user.

## Claims

1. A method for giving a message prompt when a mobile terminal accesses a mobile Internet website, comprising the following steps of:
A. receiving a message of browsing a mobile Internet webpage from a user, and triggering a corresponding message prompt event as needed (S130); and
B. parsing the message prompt event to obtain a corresponding prompt message, and displaying the prompt message (S140); the method being **characterized by** further comprising the following steps prior to the step A:
A1. defining a filename having a specific extension name for each mobile Internet webpage message prompt event (S110), wherein the filename having the specific extension name comprises a label indicating whether to give a prompt, a prompt duration and a prompt content, and the prompt content is displayed for the prompt duration if the label indicating whether to give a prompt is yes; the message prompt event is a data traffic event, and the prompt content is a value of data traffic for browsing the mobile Internet webpage; and
A2. encoding the filename having the specific extension name to obtain an encoded filename having the specific extension name (S120).

2. The method for giving a message prompt when a mobile terminal accesses a mobile Internet website of claim 1, wherein the step B further comprises:
B1. invoking a message prompt module to decode the encoded filename having the specific extension name corresponding to the message prompt event to obtain a decoded filename having the specific extension name (S141);
B2. parsing the decoded filename having the specific extension name to obtain a corresponding prompt message (S142); and
B3. invoking a message prompt box to display the prompt message (S143).

3. The method for giving a message prompt when a mobile terminal accesses a mobile Internet website of claim 2, wherein the step B3 further comprises: B31. displaying the prompt message continuously for a certain time.

4. The method for giving a message prompt when a mobile terminal accesses a mobile Internet website of claim 3, further comprising the following step subsequent to the step B31:
C. closing the prompt message after the prompt message has been displayed for the certain time, and executing subsequent operations (S150).

5. A mobile terminal, comprising:
a message prompt event triggering module (230), being configured to receive a message of browsing a mobile Internet webpage from a user, and triggering a corresponding message prompt event as needed; and
a message prompt module (240), being configured to parse the message prompt event to obtain a corresponding prompt message and configured to display the prompt message;
the mobile terminal being **characterized by** further comprising:
a message prompt event defining module (210), being configured to define a filename having a specific extension name for each mobile Internet webpage message prompt event, wherein the filename having the specific extension name comprises a label indicating whether to give a prompt, a prompt duration and a prompt content, and the prompt content is displayed for the prompt duration if the label indicating whether to give a prompt is yes; the message prompt event is a data traffic event, and the prompt content is a value of data traffic for browsing the mobile Internet webpage; and
an encoding module (220), being configured to encode the filename having the specific extension name to obtain an encoded filename having the specific extension name.

6. The mobile terminal of claim 5, wherein the message prompt module further comprises:
a decoding unit (241), being configured to decode the encoded filename having the specific extension name corresponding to the message prompt event to obtain a decoded filename having the specific extension name;
a parsing unit (242), being configured to parse the decoded filename having the specific extension name to obtain a corresponding prompt message; and
a displaying unit (243), being configured to invoke a message prompt box to display the prompt message continuously for a certain time.

## Patentansprüche

1. Verfahren zur Berichtaufforderung, wenn ein mobiles Endgerät auf eine mobile Internetseite zugreift, das die folgenden Schritte umfasst:
A. Empfangen eines Berichtes zum Durchsuchen einer mobilen Internetseite von einem Benutzer, und Auslösen eines entsprechenden Berichtaufforderungsereignisses falls nötig (S130); und
B. Analysieren des Berichtaufforderungsereignisses und Anzeigen des Aufforderungsberichtes (S140);
wobei das Verfahren **dadurch gekennzeichnet ist, dass** es weiter die folgenden Schritte vor dem Schritt A umfasst:
A1. Bestimmen eines Dateinamens, der einen spezifischen Erweiterungsname für jedes mobile-Internetseite-Berichtaufforderungsereignis aufweist (S110), wobei der den spezifischen Erweiterungsname aufweisende Dateiname ein Label umfasst, das angibt, ob eine Aufforderung gegeben werden soll, eine Aufforderungsdauer und einen Aufforderungsinhalt, und der Aufforderungsinhalt während der Aufforderungsdauer angezeigt wird, wenn das Label, das angibt, ob eine Aufforderung gegeben werden soll, ja ist; das Berichtaufforderungsereignis ein Datenverkehrsereignis ist, und der Aufforderungsinhalt ein Datenverkehrswert zum Durchsuchen der mobilen Internetseite ist; und
A2. Kodieren des den spezifischen Erweiterungsname aufweisenden Dateinamens zum Erhalten eines kodierten Dateinamens, der den spezifischen Erweiterungsname aufweist (S120).

2. Verfahren zur Berichtaufforderung, wenn ein mobiles Endgerät auf eine mobile Internetseite zugreift, nach Anspruch 1, wobei der Schritt B weiter umfasst:
B1. Aufrufen eines Berichtaufforderungsmoduls zum Dekodieren des kodierten Dateinamens, der den spezifischen dem Berichtsaufforderungsereignis entsprechenden Erweiterungsname aufweist, zum Erhalten eines dekodierten Dateinamens, der den spezifischen Erweiterungsname aufweist (5141);
B2. Analysieren des dekodierten Dateinamens, der den spezifischen Erweiterungsname aufweist, zum Erhalten eines entsprechenden Aufforderungsberichtes (S142); und
B3. Aufrufen eines Berichtaufforderungskastens zum Anzeigen des Aufforderungsberichtes (S143).

3. Verfahren zur Berichtaufforderung, wenn ein mobiles Endgerät auf eine mobile Internetseite zugreift, nach Anspruch 2, wobei der Schritt B3 weiter umfasst:
B31. Ununterbrochenes Anzeigen des Aufforderungsberichtes während eines bestimmten Zeitraums.

4. Verfahren zur Berichtaufforderung, wenn ein mobiles Endgerät auf eine mobile Internetseite zugreift, nach Anspruch 3, wobei es folgenden Schritt nach Schritt B31 umfasst:
C. Schließen des Aufforderungsberichtes nachdem der Aufforderungsbericht während eines bestimmten Zeitraums angezeigt worden ist, und Ausführen anschließender Vorgänge (S150).

5. Mobiles Endgerät umfassend:
ein mobile-Internetseite-Berichtaufforderungsereignisauslösungsmodul (230), das zum Empfangen eines Berichtes zum Durchsuchen einer mobilen Internetseite von einem Benutzer, und zum Auslösen eines entsprechenden Berichtaufforderungsereignisses falls nötig konfiguriert ist, und ein Berichtaufforderungsmodul (240), das zum Analysieren des Berichtaufforderungsereignisses und zum Anzeigen des Aufforderungsberichtes konfiguriert ist;
wobei das mobile Endgerät **dadurch gekennzeichnet ist, dass** es weiter umfasst:
ein Berichtaufforderungsereignisbestimmungsmodul (210), das zum Bestimmen eines Dateinamens, der einen spezifischen Erweiterungsname für jedes mobile-Internetseite-Berichtaufforderungsereignis aufweist, wobei der den spezifischen Erweiterungsname aufweisende Dateiname ein Label umfasst, das angibt, ob eine Aufforderung gegeben werden soll, eine Aufforderungsdauer und einen Aufforderungsinhalt, und der Aufforderungsinhalt während der Aufforderungsdauer angezeigt wird, wenn das Label , das angibt, ob eine Aufforderung gegeben werden soll, ja ist; das Berichtaufforderungsereignis ein Datenverkehrsereignis ist, und der Aufforderungsinhalt ein Datenverkehrswert zum Durchsuchen der mobilen Internetseite ist; und
ein Kodierungsmodul (220), das zum Kodieren des den spezifischen Erweiterungsname aufweisenden Dateinamens zum Erhalten eines kodierten Dateinamens, der den spezifischen Erweiterungsname aufweist, konfiguriert ist.

6. Mobiles Endgerät nach Anspruch 5, wobei das Berichtaufforderungsmodul weiter umfasst:
eine Dekodiereinheit (241), die zum Dekodieren des kodierten Dateinamens, der den spezifischen dem Berichtsaufforderungsereignis entsprechenden Erweiterungsname aufweist, zum Erhalten eines dekodierten Dateinamens, der den spezifischen Erweiterungsname aufweist;
eine Analyseeinheit (242), die zum Analysieren des dekodierten Dateinamens, der den spezifischen Erweiterungsname aufweist, zum Erhalten eines entsprechenden Aufforderungsberichtes; und
eine Anzeigeeinheit (243), die zum Aufrufen eines Berichtaufforderungskastens zum ununterbrochenen Anzeigen des Aufforderungsberichtes während eines bestimmten Zeitraums. konfiguriert ist.

## Revendications

1. Procédé de donner une invite de message lorsqu'un terminal mobile accède à un site web d'internet mobile, comprenant les étapes suivantes de :
A. recevoir d'un message de parcourir une page web de l'Internet mobile en provenance d'un utilisateur, et déclencher un événement d'invite de message correspondant comme requis (S130); et
B. analyser l'évènement d'invite de message afin d'obtenir un message d'invite correspondant et afficher le message d'invite (S140);
le procédé étant **caractérisé en ce qu'**il comprend en outre les étapes suivantes en amont de l'étape A:
A1. définir un nom de fichier présentant un nom d'extension spécifique pour chaque événement d'invite de message de page web de l'Internet mobile (S110), où le nom de fichier présentant le nom d'extension spécifique comprend une étiquette indiquant s'il faut donner une invite, une durée d'invite et un contenu d'invite, et le contenu de l'invite est affiché pendant la durée de l'invite si l'étiquette indiquant s'il faut donner une invite est oui; l'évènement d'invite de message est un événement de trafic de données, et le contenu d'invite est une valeur de trafic de données pour naviguer sur la page d'Internet mobile.; et
A2. encoder le nom de fichier présentant le nom d'extension spécifique afin d'obtenir un nom de fichier encodé présentant le nom d'extension spécifique (S120).

2. Procédé de donner une invite de message lorsqu'un terminal mobile accède à un site web de l'Internet mobile selon la revendication 1, dans lequel l'étape B comprend en outre:
B1. : invoquer un module d'invite de message afin de décoder le nom de fichier encodé présentant le nom d'extension spécifique correspondant à l'événement d'invite de message afin d'obtenir un nom de fichier décodé présentant le nom d'extension spécifique (S141);
B2. : analyser le nom de fichier décodé présentant le nom d'extension spécifique afin d'obtenir un message d'invite correspondant (S142); et
B3. : invoquer une boîte d'invite de message afin d'afficher le message d'invite (S143).

3. Procédé de donner une invite de message lorsqu'un terminal mobile accède à un site web de l'Internet mobile selon la revendication 2, dans lequel l'étape B3 comprend en outre:
B31. : afficher le message d'invite de façon continue pendant un certain temps.

4. Procédé de donner une invite de message lorsqu'un terminal mobile accède à un site web de l'Internet mobile selon la revendication 3, comprenant en outre l'étape suivante consécutive à l'étape B31:
C. fermer le message d'invite après que le message d'invite a été affiché pendant un certain temps, et exécuter des opérations suivantes (S150).

5. Terminal mobile, comprenant:
un module de déclenchement d'un événement d'invite de message (230), qui est configuré pour recevoir un message de parcourir une page web de l'Internet mobile en provenance d'un utilisateur, et déclencher un événement d'invite de message correspondant comme requis; et
un module d'invite de message (240) qui est configuré pour analyser l'évènement d'invite de message afin d'obtenir un message d'invite correspondant et est configuré pour afficher le message d'invite ;
le terminal mobile étant **caractérisé en ce qu'**il comprend en outre :
un module de définition d'événement d'invite de message (210) qui est configuré pour définir un nom de fichier présentant un nom d'extension spécifique pour chaque événement d'invite de message de page web de l'Internet mobile, où le nom de fichier présentant le nom d'extension spécifique comprend une étiquette indiquant s'il faut donner une invite, une durée d'invite et un contenu d'invite, et le contenu de l'invite est affiché pendant la durée de l'invite si l'étiquette indiquant s'il faut donner une invite est oui; l'évènement d'invite de message est un événement de trafic de données, et le contenu d'invite est une valeur de trafic de données pour naviguer sur la page web de l'Internet mobile; et
un module d'encodage (220) qui est configuré pour encoder le nom de fichier présentant le nom d'extension spécifique afin d'obtenir un nom de fichier encodé présentant le nom d'extension spécifique.

6. Terminal mobile selon la revendication 5, dans lequel module d'invite de message comprend en outre:
une unité de décodage (241) qui est configurée pour décoder le nom de fichier encodé présentant le nom d'extension spécifique correspondant à l'événement d'invite de message afin d'obtenir un nom de fichier décodé présentant le nom d'extension spécifique;
une unité d'analyse (242) qui est configurée pour analyser le nom de fichier décodé présentant le nom d'extension spécifique afin d'obtenir un message d'invite correspondant ; et
une unité d'affichage (243) qui est configurée pour invoquer une boîte d'invite de message afin d'afficher le message d'invite de façon continue pendant un certain temps.
